# EUROPEAN PATENT SPECIFICATION

(11) **EP 4 545 759 B1**
(45) Date of publication and mention of the grant of the patent: **18.03.2026**
(21) Application number: 24179095.5
(22) Date of filing: 30.05.2024
(51) Int. Cl.: F01N 3/10

(54) **EXHAUST GAS TREATMENT DEVICE**
ABGASBEHANDLUNGSVORRICHTUNG
DISPOSITIF DE TRAITEMENT DE GAZ D'ÉCHAPPEMENT

(30) Priority: 26.10.2023 EP 23205962
(43) Date of publication of application: 30.04.2025
(73) Proprietor: WinGD Ltd., 8400 Winterthur (CH)
(72) Inventor: Sönnichsen, Samuel, 8405 Winterthur (CH)
(74) Representative: Hepp Wenger Ryffel AG

(56) References cited:
- EP-A1- 3 628 836
- FR-A5- 2 182 512
- US-A- 3 935 705
- US-A- 3 972 184

## Description

The invention concerns an exhaust gas treatment device for an internal combustion engine, a retrofit kit for such an exhaust gas treatment device, an internal combustion engine comprising such an exhaust gas treatment device, and a method for operating such an internal combustion engine.

The present invention particularly is related to dual fuel combustion engines which can use ammonia or methanol or any other toxic or harmful fuel as a fuel, such as the one known from EP3628836A1.

The internal combustion engine can be operated in a gas mode in which mainly a gaseous fuel is used. The internal combustion engine can further be operated in a liquid mode, in which mainly a liquid fuel, such as a heavy fuel oil or diesel fuel, is used. Hereby, the term "gas mode" or "operation in gas mode" refers to using the gas or gaseous fuel as fuel for torque-generating combustion. However, it is possible and quite common that in the gas mode for the induced ignition of the pre-mixed air-fuel mixture, a small amount of a self-igniting liquid fuel, e.g. heavy fuel oil or diesel fuel, is injected to carry out the induced ignition, but nevertheless the combustion process which generates the torque is operated mainly with the gas or the gaseous fuel.

The internal combustion engine can be a diesel or a gas engine, a dual fuel or a multi fuel engine. Burning of liquid and or gaseous fuels in such engines is possible as well as self-igniting or forced igniting.

Furthermore, the term internal combustion engine in particular includes not only dual-fuel engines and large engines in which a main fuel is ignited with the help of a pilot injection of a self-igniting fuel but alternatively also with the adoption of a pre-chamber solution.

The term internal combustion engine also includes in particular dual-fuel engines which may be fueled with a conventional fuel, such as Diesel or LNG, and with an alternative fuel, such as ammonia or methanol, having a reduced greenhouse gas emission and a lower carbon footprint than conventional fuels. Operation with an alternative fuel may however need diesel for a forced ignition.

The present invention preferably relates to an internal combustion engine like a large marine or ship engine or a stationary engine with cylinders having an inner diameter of at least 200 mm.

The internal combustion engine preferably is a two-stroke engine or a two-stroke cross head engine.

The internal combustion engine can be a longitudinally scavenged two-stroke engine.

Engine speed is preferably below 800 RPM, and more preferably below 200 RPM, especially for 2-stroke engines, which indicates the designation of low-speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), Biological Fuels (e. g. Oil made from algae), Hydrogen, Synthetic fuels from CO2 (e. g. made by Power-To-Gas or Power-To-Liquid).

Ammonia-fuelled ships are increasingly being developed and built, or engines adapted to be driven by ammonia-fuel, following a 2018 International Maritime Organisation commitment to cut international shipping's greenhouse gas emissions.

Ammonia is a synthetic product obtained from fossil fuels, biomass, or renewable sources (wind, solar, hydro, or thermal), and when generated by renewable sources, ammonia will have virtually no carbon footprint or emit any CO₂, SO_{X}, particulate matter, or unburned hydrocarbons when combusted. The same holds for other hazardous fuels.

When the fuel is ammonia, it is desirable to minimise emissions of ammonia gas because ammonia is hazardous and has a pungent smell. This is particularly for crew safety, and when an engine stops due to a change to conventional fuel or due to an unexpected event.

Typically, exhaust gas is treated in an exhaust gas aftertreatment device to remove any hazardous components of the exhaust gas.

EP2527611 A1 proposes a compact design for an after treatment device, wherein an elongated exhaust gas manifold and a catalyst container are arranged parallel to each other and separated from each other by a partition wall extending along longitudinal direction.

An exhaust gas receiver may be fluidly connected with a turbocharger while also being able to fluidly connect to some kind of after treatment.

Aftertreatment systems for dual-fuel diesel-ammonia engines, for example disclosed in WO2023049925A1, may comprise an ammonia slip catalyst (ASC) positioned directly downstream of the selective catalytic reduction (SCR) catalyst.

All piping and valves for such fluid connections take up space and needs to be customised for each engine system, depending on which turbocharger, which arrangement of the turbocharger, which arrangement and components of the exhaust gas treatment device are used. This increases complexity and costs.

For adding a fuel slip catalyst to an exhaust gas treatment device, which might be beneficial to reduce residual ammonia or methanol, further piping and valves have to be mounted, which all bear the risk of leaks and again increase complexity and costs.

It is therefore an object of the present invention to at least partly overcome the drawbacks of the prior art and in particular to create an exhaust gas treatment device, a retrofit kit for such an exhaust gas treatment device, an internal combustion engine comprising such an exhaust gas treatment device, and a method for operating such an internal combustion engine which provide a safer operation and/or are less complex.

The object is achieved by the devices and methods of the independent claims.

Accordingly, as a first aspect of the invention, an exhaust gas treatment device for an internal combustion engine comprises an elongated exhaust manifold having a plurality of inlets and a catalyst container.

Typically, each inlet connects a respective cylinder outlet with the elongated exhaust manifold. The inlets may be arranged next to each other along the longitudinal axis of the elongated exhaust manifold.

The catalyst container comprises at least one first catalyst element and a collector section. The collector section is arranged downstream the catalyst element such that exhaust gas having passed the catalyst element may enter the collector section.

The internal combustion engine may be a dual-fuel internal combustion engine which may for example be diesel and ammonia or diesel and methanol fuelled.

The first catalyst element may be a selective catalytic reduction (SCR) catalyst element. Selective catalytic reduction means converting nitrogen oxides, also referred to as NOx, with the aid of a catalyst into nitrogen and water. Typically, a reductant, such as anhydrous ammonia, aqueous ammonia, or a urea solution, is added to a stream of exhaust gas and is reacted on a catalyst.

The collector section is fluidly connected or connectable to an outlet of the exhaust gas treatment device via a pipe crossing the exhaust manifold. Thus, the outlet of the of the exhaust gas treatment device may be arranged close to the exhaust manifold, which may provide for a compact design.

The exhaust gas treatment device comprises at least one interface for connecting a second catalyst, in particular a fuel slip catalyst, such as an Ammonia Slip Catalyst (ASC) or a Diesel Oxidation Catalyst (DOC). The second catalyst may provide for mitigating emission of slipped fuel and/or reductant, in particular for removing residual ammonia.

The second catalyst may comprise at least one second catalyst element and a second catalyst container for housing the second catalyst element.

The interface comprises at least one interface outlet fluidly connected to the pipe, and at least one interface inlet fluidly connected to the outlet.

The interface is arranged downstream the first catalyst element, wherein the term "downstream" is related to the typical flow direction of the exhaust gas from the cylinder to the outlet.

The interface provides for attaching the second catalyst downstream the first catalyst and upstream the outlet.

The interface outlet may be fluidly connected or connectable to an inlet of the second catalyst. The interface inlet may be fluidly connected or connectable to an outlet of the second catalyst.

The interface in particular allows to upgrade an existing exhaust gas treatment device by adding or replacing a second catalyst.

As the interface outlet is connected to the pipe, which is fluidly connected to the outlet, the arrangement not only provides for treatment in a second catalyst but also or alternatively for a bypass for circumventing the interface and the second catalyst, if needed or advantageous.

In a preferred embodiment, the exhaust manifold and the catalyst container may be arranged adjacently next to one another and may be delimited from one another by at least one partition. The exhaust manifold may be fluidly connected or connectable to the catalyst container via at least one orifice provided in the at least one partition for conducting the exhaust gas during operation through the first catalyst elements to the collector section.

With said arrangement no piping elements are necessary between the exhaust manifold and the catalyst container for guiding exhaust from the exhaust manifold to the catalyst container. Furthermore, a thermal contact between the exhaust manifold and the catalyst container is easier to establish. A thermal contact can have advantages in terms of providing a sufficiently high operating temperature for the catalyst without requiring additional heating.

The exhaust manifold and the catalyst container may be arranged in a common housing and/or on a common frame. This again has advantages in terms of size and/or thermal contact.

The catalyst container may contain two first catalyst elements, for example arranged at opposing lateral ends of the catalyst container. Accordingly, the partition may comprise multiple orifices, for example at the lateral ends of the elongated exhaust manifold. After having passed the first catalyst elements the exhaust gas may be collected in a central collector section arranged between the two catalysts.

The catalyst container may comprise at least two catalyst elements, arranged parallel to each other, which are supplied with exhaust gas by the same orifice in the partition.

The pipe may form a further opening in the partition or may be fixed to an opening in the partition, such that exhaust gas may leave the collector section and may cross the elongated manifold on the way to the outlet.

A pipe bifurcation may advantageously be arranged in the exhaust manifold and may be adapted to connect the pipe to the outlet on the one hand and to connect the pipe to at least one interface outlet on the other hand. This leads to reduced size and/or to a better thermal contact.

A pipe bifurcation typically connects one inflow section and two outflow branches. The pipe may be formed by the inflow section and one of the branches, while the other branch connects to the interface outlet.

The pipe bifurcation provides a fluid connection of the collector section and the outlet via the pipe on the one hand and of the collector section and at least one interface outlet via the pipe and a branch branching off from the pipe on the other hand.

Alternatively, a pipe branching may be arranged in the exhaust manifold, being connected to the pipe.

The pipe branching typically connects one inflow section and at least two or a plurality of outflow branches. The pipe may be formed by the inflow section and one of the branches, while the other branches connect to the interface outlets. Each of the other branches provides for fluidly connecting the pipe to a respective one of at least two interface outlets while the pipe provides for leading exhaust gas directly to the outlet.

The at least one interface outlet may preferably be accessible from the outside of the exhaust manifold. In particular, the interface outlet is arranged on the exhaust manifold or outside the exhaust manifold. This leads to a better accessibility, e.g. for service work and/or for connecting to a piping or to a second catalyst.

The branches of the pipe bifurcation or of the pipe branching may cross the housing of the elongated exhaust manifold to the outside of the elongated exhaust manifold.

Pipe elements crossing parts of the housing or the partition provide for additional stability as they have to be fixed for avoiding leakages. Heat fluctuations have the same effect on all parts such that thermal compensation elements are not necessary.

The interface may comprise connections means, such as a flanges, for fixing a pipe and/or for fixing the second catalyst.

The second catalyst may be attached to the interface or a second catalyst already installed may be exchanged without affecting the exhaust gas treatment device, in particular without opening the exhaust manifold. Hence, as the exhaust gas treatment device may be usable with and without an installed second catalyst, the exhaust gas treatment device is more generally applicable. The interface also allows to easily install an appropriate second catalyst, for example when the internal combustion engine shall be fuelled with a new fuel.

The interface outlet may advantageously comprise an interface outlet valve. In particular, the interface outlet valve is arranged in the interface outlet. The interface outlet valve may provide for opening and closing of the fluid connection between the pipe and the interface outlet, in particular between the pipe and the second catalyst. The interface outlet valve may preferably provide for controlling the flow rate through the interface outlet.

An example for such an interface outlet valve as well as all other valves in this application is a butterfly valve. Such valves are readily available for the required diameters and exhibit a narrow profile which has advantages for mounting. Further, a flow regulation is possible.

Preferably, the interface outlet valve is accessible from the outside of the exhaust manifold. This leads to a better accessibility, e.g. for service work and/or for connecting to a piping or to the second catalyst.

The interface outlet valve may be set to a closed state, when there is no second catalyst mounted to the interface or in cases, when it is not necessary or desired to guide exhaust gas to the second catalyst. No fuel slip may for example be expected, when the internal combustion engine is driven in a diesel mode and when there is no excess reductant. Thus, the second catalyst can be avoided which is advantageous in terms of lifetime and performance.

The interface inlet may preferably comprise an interface inlet valve. In particular, the interface inlet valve is arranged in the interface inlet. The interface inlet valve may provide for opening and closing the fluid connection between the second catalyst and the outlet. The interface inlet valve may also provide for controlling the flow rate through the interface inlet.

The interface inlet valve may be set to a closed state, when there is no second catalyst mounted to the interface or in cases, when it is not necessary or desired to guide exhaust gas to the second catalyst. A closed interface inlet valve may prevent a backflow of exhaust gas to the second catalyst. Thus, the second catalyst can be avoided which is advantageous in terms of lifetime and performance.

The exhaust manifold may advantageously be directly fluidly connectable to the outlet via a bypass pipe. In particular, the bypass pipe comprises a bypass valve which is preferably arranged in the bypass pipe.

The bypass valve may be set to an open state, when it is not necessary or not desired to guide exhaust gas through the first catalyst element or through the first catalyst element and the second catalyst, for example in cases where exhaust gas treatment should be avoided, e.g. for cost reasons.

The exhaust gas treatment device may preferably further comprise a main outlet valve, preferably arranged in or downstream the pipe. The main outlet valve in particular is accessible from the outside of the exhaust manifold. The main outlet valve may provide for opening and closing the fluid connection between the collector section and the outlet. The main outlet valve may preferably also provide for controlling the flow rate between the collector section and the outlet.

The main outlet valve may be arranged downstream and/or in a pipe bifurcation or a pipe branching, such that when the main outlet valve is set to a closed state, the exhaust gas leaving the collector section is forced into the other branch or branches and towards the interface outlet or interface outlets.

The exhaust gas treatment device may alternatively or in addition comprise at least one main inlet valve arranged between the exhaust manifold and the catalyst container, in particular in the at least one orifice arranged in the partition between the exhaust manifold and the catalyst container.

The main inlet valve may provide for opening and closing the fluid connection between the exhaust manifold and the catalyst container. The main inlet valve may also provide for controlling the flow rate between the exhaust manifold and the catalyst container.

The main inlet valve may be set to a closed state, such that exhaust gas cannot be guided to a respective first catalyst element.

The exhaust gas treatment device may comprise a plurality of main inlet valves whereof a part may be set to a closed state in order to use only a part of first catalyst elements.

By setting all first main inlet valves to a closed state and by setting the bypass valve to an open state exhaust gas may be completely guided to the outlet directly.

The exhaust gas treatment device may advantageously comprise at least one second catalyst, in particular at least one fuel slip catalyst, connected to the at least one interface.

The fuel slip catalyst, for example an ammonia slip catalyst, may also provide for removing residual reducing agent, which for example may be dosed into the exhaust gas treatment device upstream the first catalyst elements.

The second catalyst may preferably be arranged at a lateral end of and/or in a thermal contact with the catalyst container. This is advantageous in terms of providing a sufficiently high operating temperature for the second catalyst without requiring additional heating.

The second catalyst may be arranged on and/or in a thermal contact with the exhaust manifold. The second catalyst may be arranged on an outer wall of the exhaust manifold, which may be arranged opposite to a partition between the exhaust manifold and the catalyst container.

In particular, the second catalyst may be integrated in the exhaust manifold. The second catalyst may be arranged in a common housing with the exhaust manifold and preferably in a common housing with the catalyst housing.

The second catalyst may be mounted on a frame which may be fixed to the exhaust manifold and/or to the catalyst container.

An arrangement of the second catalyst close to the exhaust manifold provides for a compact design and for a better heat transfer. The second catalyst may be warmed up by hot exhaust gas leaving the cylinders and entering the exhaust manifold. This is advantageous in terms of providing a sufficiently high operating temperature for the second catalyst without requiring additional heating.

The exhaust gas treatment device may advantageously comprise at least two second catalysts connected to the at least one interface. Then, the volume stream of exhaust gas leaving the collector section may be divided into at least two gas streams for the respective second catalysts.

Thus, two or more second catalysts may be used in parallel which leads to a higher contact area and lower velocities with the divided volumetric exhaust gas flow. The pressure drop in each second catalyst is therefore lower compared to a serial arrangement of the second catalysts. This is advantageous in terms of performance and catalytic effect.

According to a second aspect of the invention an internal combustion engine, in particular a dual fuel combustion engine, preferably an ammonia fuelled combustion engine, comprises at least one cylinder and at least one exhaust gas treatment device as described above with regard to the first aspect of the invention.

The internal combustion engine may comprise one, in particular exactly one, exhaust gas treatment device for all cylinders of the engine.

The internal combustion engine may comprise one, in particular exactly one, exhaust gas treatment device as described above for up to seven cylinders of the engine, in particular for up to six cylinders of the engine, in particular for up to four cylinders of the engine. This is due to the fact that over the specified number of cylinders, a second, third etc. manifold is typically used which has its own second, third, etc. exhaust gas treatment device.

The internal combustion engine may preferably comprise a turbocharger, which is fluidly connectable or connected with the outlet of the exhaust gas treatment device.

The internal combustion engine may advantageously comprise a control unit adapted to switch an operation mode between a first operation mode, a second operation mode and a third operation mode.

In the first operation mode (e.g., Tier 2) the bypass valve is open. In the first operation mode the main inlet valve and the main outlet valve are closed, while preferably the interface outlet valve is closed and while preferably the interface inlet valve is closed, too.

In the first operation mode, exhaust gas may be guided directly to the outlet without passing the catalyst housing and the second catalyst. This saves costs.

In the second operation mode (e.g., IMO Tier III Diesel operation or IMO Tier III ammonia operation without second catalyst) the bypass valve is closed. In the second operation mode the main inlet valve and the main outlet valve are open, while the interface outlet valve is closed and preferably the interface inlet valve is closed, too. In the second operation mode, exhaust gas may be guided only through the catalyst housing without passing the second catalyst. Thus, e.g. a NOx reduction is feasible without utilizing the second catalyst, for example an ASC, e.g. in Diesel operating mode. This leads to improved performance and durability of the second catalyst.

In the third operation mode (e.g., IMO Tier III ammonia operation with second catalyst) the bypass valve is closed. In the third operation mode the main inlet valve is open and the main outlet valve is closed, while the interface outlet valve and the interface inlet valve are open.

In the third operation mode, exhaust gas may be guided through the catalyst housing and subsequently through the second catalyst. Thus, both e.g. NOx reduction as well as a utilizing of the second catalyst, for example an ASC, becomes possible. This leads to cleaner exhaust gases.

Similar operation modes can be defined for a methanol operation of the internal combustion engine.

The main inlet valve preferably is arranged in the at least one orifice.

The main outlet valve preferably is arranged in or downstream the pipe.

The interface outlet valve preferably is arranged in the interface outlet.

The interface inlet valve preferably is arranged in the interface inlet.

According to a third aspect of the invention, a retrofit kit for an exhaust gas treatment device as described above with regard to the first aspect of the invention comprises at least one second catalyst, in particular at least one fuel slip catalyst, connectable to the interface.

Within this context, "connectable" particularly means, that after a connection between the interface and the second catalyst has been established, the interface and the second catalyst are fluidly connected or fluidly connectable.

Within this context "fluidly connectable" means that a fluid connection may be achieved, if an obstacle will be removed from the fluid path, for example when a valve is opened.

In particular, the at least one second catalyst comprises a piping system with a first piping which is connectable to the interface outlet and a second piping connectable to the interface inlet. Preferably, a flange connection may be established.

The retrofit kit may be used to equip an e.g. already existing exhaust gas treatment device with e.g. a fuel slip catalyst or to replace a fuel slip catalyst of the exhaust gas treatment device.

A fourth aspect of the invention concerns a method for operating an internal combustion engine as described above with regard to the second aspect of the invention comprising an exhaust gas treatment device according to the first aspect of the invention.

For operating the internal combustion engine in a first operation mode the bypass valve is opened. For the first operation mode the main inlet valve and the main outlet valve are closed, and the interface outlet valve and preferably the interface inlet valve are closed.

As long as the internal combustion engine is in the first operation mode, the valve settings are not changed, and the exhaust gas is directly guided to the outlet and is not allowed to pass the first catalyst elements and the second catalyst.

For operating the internal combustion engine in a second operation mode the bypass valve is closed. For the second operation mode the main inlet valve and the main outlet valve are opened, and the interface outlet valve and preferably the interface inlet valve are closed.

As long as the internal combustion engine is in the second operation mode, the valve settings are not changed, and the exhaust gas is guided through the catalyst elements but is not allowed to pass the second catalyst.

For operating the internal combustion engine in a third operation mode the bypass valve is closed. For the third operation mode the main inlet valve is opened and the main outlet valve is closed, while the interface outlet valve and the interface inlet valve are opened.

As long as the internal combustion engine is in the third operation mode, the valve settings are not changed, and the exhaust gas is guided through the catalyst elements and subsequently through the second catalyst.

The operation mode may be set by a control unit in dependence of parameters of the internal combustion engine, for example load, environmental temperature, engine temperature, engine pressure, fuel mode and others or in dependence of regulatory obligations.

Further advantageous aspects of the invention are explained in the following by means of exemplary embodiments and the figures. Functionally equal elements are provided with the same reference signs. In the drawings, in a schematic manner:
- Figure 1:: shows a schematic illustration of an internal combustion engine;
- Figure 2:: shows a schematic illustration of a first example of an exhaust gas treatment device in a perspective view;
- Figure 3:: shows a schematic illustration of a second example of an exhaust gas treatment device in a sectional view;
- Figure 4:: shows a schematic illustration of the first example of the exhaust gas treatment device of figure 2 in a perspective view with a section;
- Figure 5:: shows a schematic illustration of a third example of an exhaust gas treatment device in a perspective view;
- Figure 6:: shows a schematic illustration of a part of a fourth example of an exhaust gas treatment device in a perspective view;
- Figure 7:: shows a schematic illustration of a fifth example of an exhaust gas treatment device in a perspective view.

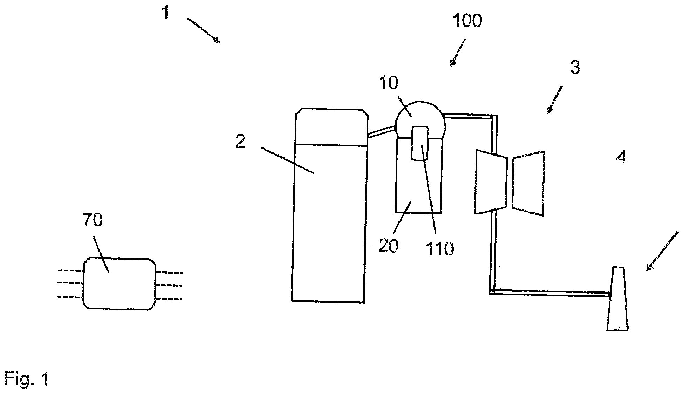

Figure 1 shows a schematic illustration of an internal combustion engine 1.

The internal combustion engine 1 comprises a cylinder 2 and an exhaust gas treatment device 100 with an elongated exhaust manifold 10, a catalyst container 20 and a second catalyst 110. The internal combustion engine 1 further comprises a turbocharger 3 and a funnel 4.

Exhaust gas leaving the cylinder 2 may be guided though the exhaust has treatment device 100 and subsequently through the turbocharger 3 before it is expelled though the funnel 4.

As all components have a large space requirement and the available space on the ship is limited, it is important to arrange the components in a compact manner while allowing accessibility at the same time.

The internal combustion engine 1 typically comprises a control unit 70 for controlling the piston movement and the cylinder valves (not shown in the figures) as well as the valves of the exhaust gas treatment device 100.

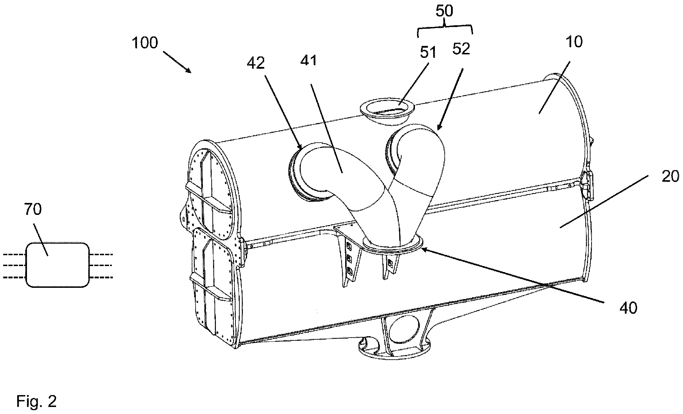

Figure 2 shows an exhaust gas treatment device 100 comprising an elongated exhaust manifold 10 and a catalyst container 20.

The exhaust gas treatment device 100 comprises an outlet 40 which may be connected to a turbocharger 3 (see figure 1).

A bypass pipe 41 comprising a bypass valve 42 fluidly connects the elongated exhaust manifold 10 to the outlet, when the bypass valve 42 is open.

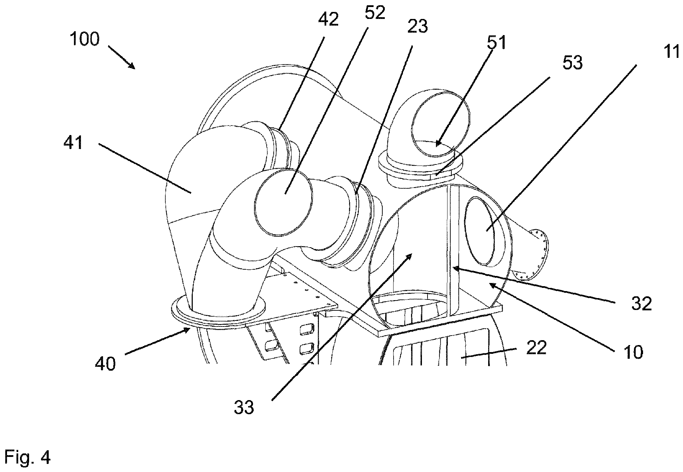

The exhaust gas treatment device 100 comprises an interface 50 for connecting a second catalyst 110 (not shown in this figure). The interface 50 comprises an interface outlet 51 fluidly connected to the pipe 32 (not shown in this figure), and at least one interface inlet 52 (see also figure 4) fluidly connected to the outlet 40.

The valves, for example the bypass valve 42, of the exhaust gas treatment device 100 are controlled by a control unit 70. The valves can be set to an open or a closed position or any position in between for controlling the flow rate of the fluid connection through the valves. In this example, the control unit for controlling the exhaust gas treatment device 100 is the same as the control unit of the combustion engine 1 (see figure 1). Alternatively, there may be a separate control unit for controlling the exhaust gas treatment device 100 or the control unit for controlling the exhaust gas treatment device 100 may be a part of or may be integrated in the control unit of the combustion engine 1.

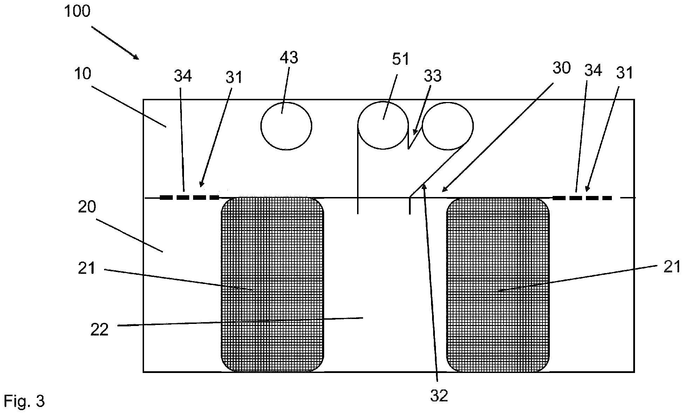

Figure 3 shows a schematic illustration of a second example of an exhaust gas treatment device 100 according to the invention in a sectional view.

The catalyst container 20 hosts two first catalyst elements 21, in particular SCR catalyst elements, and a collector section 22 arranged between the first catalyst elements 21.

The elongated exhaust manifold 10 and the catalyst container 20 are arranged adjacently next to one another and are delimited from one another by a partition 30. Thus, space is saved and a thermal contact between the exhaust manifold and the catalyst container is easier to establish. The exhaust manifold 10 is fluidly connected or connectable to the catalyst container 20 via orifices 31 provided in the partition 30 for conducting the exhaust gas during operation through the first catalyst elements 21 to the collector section 22.

A main inlet valve 34 is arranged in each orifice 31. Exhaust gas may enter the first catalyst container 20 when the main inlet valves 34 are open. The exhaust gas is guided through the first catalyst elements 21 and then collected in the collector section 22.

The collector section 22 is connected to an outlet 40 (not shown in this figure) of the exhaust gas treatment device 100 via a pipe 32 crossing the exhaust manifold 10.

A pipe bifurcation 33 is arranged in the exhaust manifold 10 adapted to connect the pipe 32 to the outlet 40 on the one hand and to connect the pipe 32 to an interface outlet 51 on the other hand.

Exhaust gas may be branched off the pipe 32 and be guided to the interface outlet 51.

The elongated exhaust manifold 10 comprises a bypass opening 43 by which exhaust gas may be guided to the outlet 40 (not shown in this figure).

Figure 4 shows a schematic illustration of the first example of figure 2 in a further perspective view with a section.

The elongated exhaust manifold 10 comprises a plurality of inlets 11 for bringing exhaust gas expelled from the cylinders 2 (see figure 1) into the elongated exhaust manifold 10.

The pipe bifurcation 33 is arranged in the exhaust manifold 10 which is adapted to connect the pipe 32 to the outlet 40 on the one hand and to connect the pipe 32 to an interface outlet 51 on the other hand.

In one of the branches of the pipe bifurcation 33 there is arranged a main outlet valve 23, in the other branch there is arranged an interface outlet valve 53.

Depending on the setting of the valves, exhaust gas coming from the collector section 22 is either guided to the outlet 40 or to the interface outlet 51 (or both in a specific ratio, based on the flow rate settings of the valves). The second catalyst may have an optimal capacity which may be related to a specific flow rate. By setting the valves appropriately, a maximal reduction of hazardous components may be achieved.

In case the main outlet valve 23 is open and the interface outlet valve 53 is closed exhaust gas is guided to the outlet 40.

In case the main outlet valve 23 is closed and the interface outlet valve 53 is open exhaust gas is guided to interface outlet 51.

Downstream the main outlet valve 23 and upstream the outlet there is an interface inlet 52. A piping (not shown in this figure) of a second catalyst 110 (not shown in this figure) may bring in exhaust gas from the second catalyst into the interface inlet 52.

Alternatively, if a bypass valve 42, arranged in the bypass pipe 41 is open, exhaust gas will be guided directly from the elongated exhaust manifold 10 to the outlet 40.

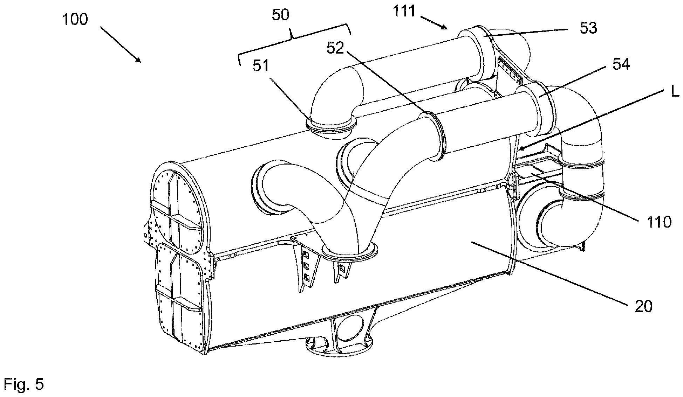

Figure 5 shows a schematic illustration of a third example of an exhaust gas treatment device 100 in a perspective view.

The exhaust gas treatment device 100 comprises an elongated exhaust manifold 10 and a catalyst container 20.

The exhaust gas treatment device 100 comprises an interface 50 with an interface outlet 51 and interface inlet 52.

A second catalyst 110 which is mounted at the longitudinal end L of the catalyst container 20 may be fluidly connected to the interface 50 via a piping system 111.

A fluid coupling between the interface 50 and the second catalyst 110 may be established when an interface outlet valve 53 arranged downstream the interface outlet 51 and an interface inlet valve 54 arranged upstream the interface inlet 52 are opened.

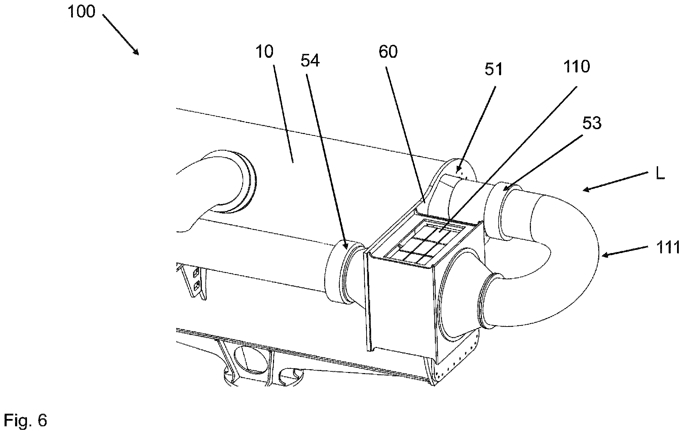

Figure 6 shows a schematic illustration of a part of a fourth example of an exhaust gas treatment device 100 in a perspective view. A second catalyst 110 is mounted on a frame 60 fixed at the longitudinal end L of the elongated exhaust manifold 10.

As the interface outlet 51 is arranged at the lateral end L of the elongated exhaust manifold 10, a short piping system 111 is sufficient for fluidly connecting the second catalyst 110. This saves space and yield a better thermal contact.

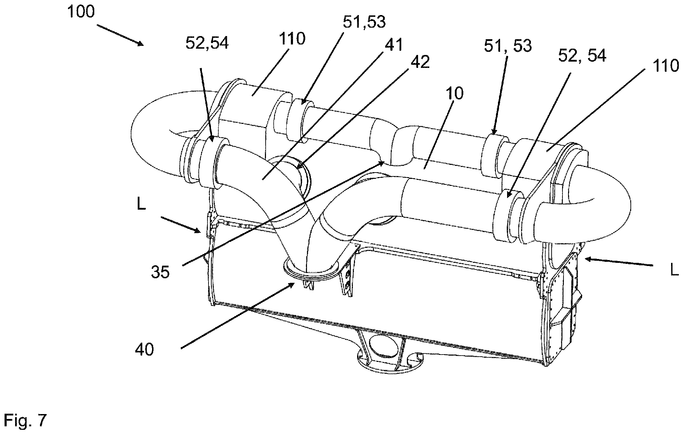

Figure 7 shows a schematic illustration of a fifth example of an exhaust gas treatment device 100 in a perspective view.

The exhaust gas treatment device 100 comprises two interface outlets 51 and two interface inlets 52, each having a respective interface outlet valve 53 or interface inlet valve 54.

Accordingly, two second catalysts 110 are mounted on the elongated exhaust manifold 10 at respective longitudinal ends L.

One branch 35 of the pipe bifurcation 33 (not shown in the figure) arranged in the elongated exhaust manifold 10 provides two interface outlets 51 tending towards the lateral ends L of the elongated exhaust manifold 10. The pressure drop in each second catalyst is therefore lower compared to a serial arrangement of the second catalysts. This is advantageous in terms of performance and catalytic effect.

Note:
Any embodiments described with respect to the devices shall similarly pertain to the method. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

## Claims

1. Exhaust gas treatment device (100) for an internal combustion engine (1), in particular a dual-fuel internal combustion engine which may be ammonia fuelled,
comprising
- an elongated exhaust manifold (10) with a plurality of inlets (11),
- a catalyst container (20) comprising at least one first catalyst element (21), in particular an SCR catalyst element, and a collector section (22),
**characterised in that** the collector section (22) is connected to an outlet (40) of the exhaust gas treatment device (100) via a pipe (32) crossing the exhaust manifold (10),
wherein the exhaust gas treatment device (100) comprises at least one interface (50) for connecting a second catalyst, in particular a fuel slip catalyst (110),
the interface (50) comprising at least one interface outlet (51) fluidly connected to the pipe (32), and at least one interface inlet (52) fluidly connected to the outlet (40).

2. Exhaust gas treatment device (100) according to claim 1, wherein the exhaust manifold (10) and the catalyst container (20) are arranged adjacently next to one another and are delimited from one another by at least one partition (30), wherein the exhaust manifold (10) is fluidly connected or connecteable to the catalyst container (20) via at least one orifice (31) provided in the at least one partition (30) for conducting the exhaust gas during operation through the first catalyst elements (21) to the collector section (22).

3. Exhaust gas treatment device (100) according to any of the preceding claims, wherein a pipe branching, in particular a pipe bifurcation (33), is arranged in the exhaust manifold (10) adapted to connect the pipe (32) to the outlet (40) on the one hand and to at least one interface outlet (51) on the other hand.

4. Exhaust gas treatment device (100) according to any of the preceding claims, wherein the interface outlet (51) is accessible from the outside of the exhaust manifold (10), and in particular wherein the interface outlet (51) is arranged on the exhaust manifold (10) or outside the exhaust manifold (10).

5. Exhaust gas treatment device (100) according to any of the preceding claims, wherein the interface outlet (51) comprises an interface outlet valve (53), and in particular wherein the interface outlet valve (53) is arranged in the interface outlet (51).

6. Exhaust gas treatment device (100) according to any of the preceding claims, wherein the interface inlet (52) comprises an interface inlet valve (54), and in particular wherein the interface inlet valve (54) is arranged in the interface inlet (52).

7. Exhaust gas treatment device (100) according to any of the preceding claims, wherein the exhaust manifold (10) is directly fluidly connectable to the outlet (40) via a bypass pipe (41), and in particular wherein the bypass pipe comprises a bypass valve (42) which is preferably arranged in the bypass pipe (41).

8. Exhaust gas treatment device (100) according to any of the preceding claims further comprising
a main outlet valve (23), preferably arranged in or downstream the pipe (32), in particular accessible from the outside of the exhaust manifold (10),
and/or
at least main inlet valve (34) arranged between the exhaust manifold (10) and the catalyst container (20), in particular in the at least one orifice (31) arranged in the partition (30) between the exhaust manifold (10) and the catalyst container (20).

9. Exhaust gas treatment device (100) according to any of the preceding claims comprising at least one second catalyst, in particular at least one fuel slip catalyst (110), connected to the at least one interface (50).

10. Exhaust gas treatment device (100) according to claim 9,
wherein the second catalyst (110) is arranged
- at a lateral end (L) of and/or in a thermal contact with the catalyst container (20) and/or
- on and/or in a thermal contact with the exhaust manifold (10), and in particular wherein the second catalyst (110) is integrated on or in the exhaust manifold (10).

11. Exhaust gas treatment device (100) according to claim 9 or 10, wherein the second catalyst (110) is mounted on a frame (60) which is fixed to the exhaust manifold (10) and/or to the catalyst container (20).

12. Exhaust gas treatment device (100) according to any one of the claims 9 to 11 comprising at least two second catalysts (110) connected to the at least one interface (50).

13. Internal combustion engine (1), in particular a dual fuel combustion engine, preferably an ammonia fuelled combustion engine, comprising at least one cylinder (2) and at least one exhaust gas treatment device (100) according to at least one of the preceding claims,
and in particular wherein the internal combustion engine (1) comprises one exhaust gas treatment device (100) for all cylinders of the internal combustion engine (1) or wherein the internal combustion engine (1) comprises one exhaust gas treatment device (100) for up to seven cylinders (2) of the internal combustion engine (1) each, in particular for up to six cylinders (2) of the internal combustion engine (1) each, in particular for up to four cylinders (2) of the internal combustion engine (1) each.

14. Internal combustion engine according to claim 13 comprising a turbocharger (3), which is fluidly connectable or connected with the outlet (40) of the exhaust gas treatment device (100).

15. Internal combustion engine according to claim 13 or 14 comprising a control unit (70) adapted to switch an operation mode between
- a first operation mode, wherein the bypass valve (42) is open and an main inlet valve (34), preferably arranged in the at least one orifice (31), and an main outlet valve (23), preferably arranged in or downstream the pipe (32), are closed, and wherein preferably the interface outlet valve (52), preferably arranged in the interface outlet (51), and the interface inlet valve (54), preferably arranged in the interface inlet (52), are closed,
- a second operation mode, wherein the bypass valve (42) is closed and the main inlet valve (34), preferably arranged in the at least one orifice (31), and the main outlet valve (23), preferably arranged in or downstream the pipe (32), are open, and the interface outlet valve (52), preferably arranged in the interface outlet (51) is closed, and preferably the interface inlet valve (54), preferably arranged in the interface inlet (52), is closed, and
- a third operation mode, wherein the bypass (42) valve is closed and the main inlet valve (34), preferably arranged in the at least one orifice (31), is open and the main outlet valve (23), preferably arranged in or downstream the pipe (32), is closed, and wherein the interface outlet valve (52), preferably arranged in the interface outlet (51), and the interface inlet valve (54), preferably arranged in the interface inlet (52), are open.

16. Retrofit kit including an exhaust gas treatment device (100), according to one of claims 1-12, comprising at least one second catalyst (110) connectable to the interface (50), and in particular wherein the at least one second catalyst (110) comprises a first piping which is connectable to an interface outlet (51) and a second piping connectable to an interface inlet (52), and in particular wherein the second catalyst is s fuel slip catalyst.

17. Method for operating an internal combustion engine according to claim 15,
- wherein for a first operation mode the main inlet valve (34), preferably arranged in the at least one orifice (31), and the main outlet valve (23), preferably arranged in or downstream the pipe (32), are closed, and the interface outlet valve (52), preferably arranged in the interface outlet (51), and the interface inlet valve (54), preferably arranged in the interface inlet (52), are closed, and the bypass valve (42) is opened,
- wherein for a second operation mode the main inlet valve (34), preferably arranged in the at least one orifice (31), and the main outlet valve (23), preferably arranged in or downstream the pipe (32), are opened, and the interface outlet valve (52), preferably arranged in the interface outlet (51), and the interface inlet valve (54), preferably arranged in the interface inlet (52), are closed, and the bypass valve (42) is closed,
- wherein for a third operation mode the main inlet valve (34), preferably arranged in the at least one orifice (31), is opened and the main outlet valve (23), preferably arranged in or downstream the pipe (32), is closed, and the interface outlet valve (52), preferably arranged in the interface outlet (51), and the interface inlet valve (54), preferably arranged in the interface inlet (52), are opened, and the bypass (42) valve is closed.

## Patentansprüche

1. Abgasbehandlungsvorrichtung (100) für einen Verbrennungsmotor (1), insbesondere einen Zweikraftstoff-Verbrennungsmotor, der mit Ammoniak betrieben werden kann,
umfassend
- einen länglichen Abgassammler (10) mit einer Vielzahl von Einlässen (11),
- einen Katalysatorbehälter (20), der mindestens ein erstes Katalysatorelement (21), insbesondere ein SCR-Katalysatorelement, und einen Sammelabschnitt (22) umfasst,
**dadurch gekennzeichnet, dass**
der Sammelabschnitt (22) mit einem Auslass (40) der Abgasbehandlungsvorrichtung (100) über ein Rohr (32) verbunden ist, das den Abgassammler (10) kreuzt,
wobei die Abgasbehandlungsvorrichtung (100) mindestens eine Schnittstelle (50) zum Anschliessen eines zweiten Katalysators, insbesondere eines Kraftstoffschlupfkatalysators (110), umfasst,
wobei die Schnittstelle (50) mindestens einen Schnittstellenauslass (51), der fluidisch mit dem Rohr (32) verbunden ist, und mindestens einen Schnittstelleneinlass (52), der fluidisch mit dem Auslass (40) verbunden ist, umfasst.

2. Abgasbehandlungsvorrichtung (100) nach Anspruch 1, wobei der Abgassammler (10) und der Katalysatorbehälter (20) benachbart nebeneinander angeordnet und durch mindestens eine Trennwand (30) voneinander abgegrenzt sind, wobei der Abgassammler (10) über mindestens eine in der mindestens einen Trennwand (30) vorgesehene Öffnung (31) fluidisch mit dem Katalysatorbehälter (20) verbunden oder verbindbar ist, um das Abgas während des Betriebs durch die ersten Katalysatorelemente (21) zum Sammelabschnitt (22) zu leiten.

3. Abgasbehandlungsvorrichtung (100) nach einem der vorhergehenden Ansprüche, wobei eine Rohrverzweigung, insbesondere eine Rohrgabelung (33), im Abgassammler (10) angeordnet ist, die dazu eingerichtet ist, das Rohr (32) einerseits mit dem Auslass (40) und andererseits mit mindestens einem Schnittstellenauslass (51) zu verbinden.

4. Abgasbehandlungsvorrichtung (100) nach einem der vorhergehenden Ansprüche, wobei der Schnittstellenauslass (51) von der Aussenseite des Abgassammlers (10) zugänglich ist, und wobei der Schnittstellenauslass (51) insbesondere am Abgassammler (10) oder ausserhalb des Abgassammlers (10) angeordnet ist.

5. Abgasbehandlungsvorrichtung (100) nach einem der vorhergehenden Ansprüche, wobei der Schnittstellenauslass (51) ein Schnittstellenauslassventil (53) umfasst, und wobei das Schnittstellenauslassventil (53) insbesondere im Schnittstellenauslass (51) angeordnet ist.

6. Abgasbehandlungsvorrichtung (100) nach einem der vorhergehenden Ansprüche, wobei der Schnittstelleneinlass (52) ein Schnittstelleneinlassventil (54) umfasst, und wobei das Schnittstelleneinlassventil (54) insbesondere im Schnittstelleneinlass (52) angeordnet ist.

7. Abgasbehandlungsvorrichtung (100) nach einem der vorhergehenden Ansprüche, wobei der Abgassammler (10) über ein Bypass-Rohr (41) direkt fluidisch mit dem Auslass (40) verbindbar ist, und wobei das Bypass-Rohr insbesondere ein Bypass-Ventil (42) umfasst, das vorzugsweise im Bypass-Rohr (41) angeordnet ist.

8. Abgasbehandlungsvorrichtung (100) nach einem der vorhergehenden Ansprüche, ferner umfassend
ein Hauptauslassventil (23), das vorzugsweise in oder stromabwärts des Rohrs (32) angeordnet ist, insbesondere von der Aussenseite des Abgassammlers (10) zugänglich ist, und/oder
mindestens ein Haupteinlassventil (34), das zwischen dem Abgassammler (10) und dem Katalysatorbehälter (20) angeordnet ist, insbesondere in der mindestens einen Öffnung (31), die in der Trennwand (30) zwischen dem Abgassammler (10) und dem Katalysatorbehälter (20) angeordnet ist.

9. Abgasbehandlungsvorrichtung (100) nach einem der vorhergehenden Ansprüche, umfassend mindestens einen zweiten Katalysator, insbesondere mindestens einen Kraftstoffschlupfkatalysator (110), der mit der mindestens einen Schnittstelle (50) verbunden ist.

10. Abgasbehandlungsvorrichtung (100) nach Anspruch 9, wobei der zweite Katalysator (110) angeordnet ist
- an einem seitlichen Ende (L) des Katalysatorbehälters (20) und/oder in thermischem Kontakt mit dem Katalysatorbehälter (20)
und/oder
- auf dem und/oder in thermischem Kontakt mit dem Abgassammler (10), und insbesondere wobei der zweite Katalysator (110) auf oder in dem Abgassammler (10) integriert ist.

11. Abgasbehandlungsvorrichtung (100) nach Anspruch 9 oder 10, wobei der zweite Katalysator (110) an einem Rahmen (60) montiert ist, der am Abgassammler (10) und/oder am Katalysatorbehälter (20) befestigt ist.

12. Abgasbehandlungsvorrichtung (100) nach einem der Ansprüche 9 bis 11, umfassend mindestens zwei zweite Katalysatoren (110), die mit der mindestens einen Schnittstelle (50) verbunden sind.

13. Verbrennungsmotor (1), insbesondere ein Zweikraftstoff-Verbrennungsmotor, vorzugsweise ein mit Ammoniak betriebener Verbrennungsmotor, umfassend mindestens einen Zylinder (2) und mindestens eine Abgasbehandlungsvorrichtung (100) nach mindestens einem der vorhergehenden Ansprüche,
und insbesondere
wobei der Verbrennungsmotor (1) eine Abgasbehandlungsvorrichtung (100) für alle Zylinder des Verbrennungsmotors (1) umfasst oder
wobei der Verbrennungsmotor (1) jeweils eine Abgasbehandlungsvorrichtung (100) für bis zu sieben Zylinder (2) des Verbrennungsmotors (1), insbesondere für bis zu sechs Zylinder (2) des Verbrennungsmotors (1), insbesondere für bis zu vier Zylinder (2) des Verbrennungsmotors (1) umfasst.

14. Verbrennungsmotor nach Anspruch 13, umfassend einen Turbolader (3), der mit dem Auslass (40) der Abgasbehandlungsvorrichtung (100) fluidisch verbindbar oder verbunden ist.

15. Verbrennungsmotor nach Anspruch 13 oder 14, umfassend eine Steuereinheit (70), die dazu eingerichtet ist, einen Betriebsmodus umzuschalten zwischen
- einem ersten Betriebsmodus, in dem das Bypass-Ventil (42) geöffnet ist und ein Haupteinlassventil (34), das vorzugsweise in der mindestens einen Öffnung (31) angeordnet ist, und ein Hauptauslassventil (23), das vorzugsweise in oder stromabwärts des Rohrs (32) angeordnet ist, geschlossen sind, und wobei vorzugsweise das Schnittstellenauslassventil (52), das vorzugsweise im Schnittstellenauslass (51) angeordnet ist, und das Schnittstelleneinlassventil (54), das vorzugsweise im Schnittstelleneinlass (52) angeordnet ist, geschlossen sind,
- einem zweiten Betriebsmodus, in dem das Bypass-Ventil (42) geschlossen ist und das Haupteinlassventil (34), das vorzugsweise in der mindestens einen Öffnung (31) angeordnet ist, und das Hauptauslassventil (23), das vorzugsweise in oder stromabwärts des Rohrs (32) angeordnet ist, geöffnet sind, und das Schnittstellenauslassventil (52), das vorzugsweise im Schnittstellenauslass (51) angeordnet ist, geschlossen ist, und vorzugsweise das Schnittstelleneinlassventil (54), das vorzugsweise im Schnittstelleneinlass (52) angeordnet ist, geschlossen ist, und
- einem dritten Betriebsmodus, in dem das Bypass-Ventil (42) geschlossen ist und das Haupteinlassventil (34), das vorzugsweise in der mindestens einen Öffnung (31) angeordnet ist, geöffnet ist und das Hauptauslassventil (23), das vorzugsweise in oder stromabwärts des Rohrs (32) angeordnet ist, geschlossen ist, und wobei das Schnittstellenauslassventil (52), das vorzugsweise im Schnittstellenauslass (51) angeordnet ist, und das Schnittstelleneinlassventil (54), das vorzugsweise im Schnittstelleneinlass (52) angeordnet ist, geöffnet sind.

16. Nachrüstsatz, beinhaltend eine Abgasbehandlungsvorrichtung (100) nach einem der Ansprüche 1-12, umfassend mindestens einen zweiten Katalysator (110), der mit der Schnittstelle (50) verbindbar ist,
und insbesondere
wobei der mindestens eine zweite Katalysator (110) eine erste Rohrleitung, die mit einem Schnittstellenauslass (51) verbindbar ist, und eine zweite Rohrleitung, die mit einem Schnittstelleneinlass (52) verbindbar ist, umfasst, und insbesondere wobei der zweite Katalysator ein Kraftstoffschlupfkatalysator ist.

17. Verfahren zum Betreiben eines Verbrennungsmotors nach Anspruch 15,
- wobei für einen ersten Betriebsmodus das Haupteinlassventil (34), das vorzugsweise in der mindestens einen Öffnung (31) angeordnet ist, und das Hauptauslassventil (23), das vorzugsweise in oder stromabwärts des Rohrs (32) angeordnet ist, geschlossen werden, und das Schnittstellenauslassventil (52), das vorzugsweise im Schnittstellenauslass (51) angeordnet ist, und das Schnittstelleneinlassventil (54), das vorzugsweise im Schnittstelleneinlass (52) angeordnet ist, geschlossen werden, und das Bypass-Ventil (42) geöffnet wird,
- wobei für einen zweiten Betriebsmodus das Haupteinlassventil (34), das vorzugsweise in der mindestens einen Öffnung (31) angeordnet ist, und das Hauptauslassventil (23), das vorzugsweise in oder stromabwärts des Rohrs (32) angeordnet ist, geöffnet werden, und das Schnittstellenauslassventil (52), das vorzugsweise im Schnittstellenauslass (51) angeordnet ist, und das Schnittstelleneinlassventil (54), das vorzugsweise im Schnittstelleneinlass (52) angeordnet ist, geschlossen werden, und das Bypass-Ventil (42) geschlossen wird,
- wobei für einen dritten Betriebsmodus das Haupteinlassventil (34), das vorzugsweise in der mindestens einen Öffnung (31) angeordnet ist, geöffnet wird und das Hauptauslassventil (23), das vorzugsweise in oder stromabwärts des Rohrs (32) angeordnet ist, geschlossen wird, und das Schnittstellenauslassventil (52), das vorzugsweise im Schnittstellenauslass (51) angeordnet ist, und das Schnittstelleneinlassventil (54), das vorzugsweise im Schnittstelleneinlass (52) angeordnet ist, geöffnet werden, und das Bypass-Ventil (42) geschlossen wird.

## Revendications

1. Dispositif de traitement des gaz d'échappement (100) pour un moteur à combustion interne (1), en particulier un moteur à combustion interne à double carburant pouvant être alimenté à l'ammoniac,
comprenant
• un collecteur d'échappement allongé (10) comprenant une pluralité d'entrées (11),
• un pot catalytique (20) comprenant au moins un premier élément catalytique (21), en particulier un élément catalytique SCR, et une section collectrice (22),
**caractérisé en ce que**
la section collectrice (22) est reliée à une sortie (40) du dispositif de traitement des gaz d'échappement (100) par l'intermédiaire d'un conduit (32) traversant le collecteur d'échappement (10),
dans lequel le dispositif de traitement des gaz d'échappement (100) comprend au moins une interface (50) destinée au raccordement d'un second catalyseur, en particulier un catalyseur de glissement de carburant (110),
l'interface (50) comprenant au moins une sortie d'interface (51) en communication fluidique avec le conduit (32), et au moins une entrée d'interface (52) en communication fluidique avec la sortie (40).

2. Dispositif de traitement des gaz d'échappement (100) selon la revendication 1, dans lequel le collecteur d'échappement (10) et le pot catalytique (20) sont disposés de manière adjacente l'un à côté de l'autre et sont délimités l'un par rapport à l'autre par au moins une cloison (30), dans lequel le collecteur d'échappement (10) est en communication fluidique ou peut être mis en communication fluidique avec le pot catalytique (20) par l'intermédiaire d'au moins un orifice (31) prévu dans ladite au moins une cloison (30) afin de conduire les gaz d'échappement, pendant le fonctionnement, à travers les premiers éléments catalytiques (21) jusqu'à la section collectrice (22).

3. Dispositif de traitement des gaz d'échappement (100) selon l'une quelconque des revendications précédentes, dans lequel un embranchement de conduit, en particulier une bifurcation de conduit (33), est disposé dans le collecteur d'échappement (10), et est adaptée pour relier le conduit (32) à la sortie (40) d'une part, et à au moins une sortie d'interface (51) d'autre part.

4. Dispositif de traitement des gaz d'échappement (100) selon l'une quelconque des revendications précédentes, dans lequel la sortie d'interface (51) est accessible depuis l'extérieur du collecteur d'échappement (10), et en particulier dans lequel la sortie d'interface (51) est disposée sur le collecteur d'échappement (10) ou à l'extérieur du collecteur d'échappement (10).

5. Dispositif de traitement des gaz d'échappement (100) selon l'une quelconque des revendications précédentes, dans lequel la sortie d'interface (51) comprend une vanne de sortie d'interface (53), et en particulier dans lequel la vanne de sortie d'interface (53) est disposée dans la sortie d'interface (51).

6. Dispositif de traitement des gaz d'échappement (100) selon l'une quelconque des revendications précédentes, dans lequel l'entrée d'interface (52) comprend une vanne d'entrée d'interface (54), et en particulier dans lequel la vanne d'entrée d'interface (54) est disposée dans l'entrée d'interface (52).

7. Dispositif de traitement des gaz d'échappement (100) selon l'une quelconque des revendications précédentes, dans lequel le collecteur d'échappement (10) peut être mis en communication fluidique directe avec la sortie (40) par l'intermédiaire d'une conduite de dérivation (41), et en particulier dans lequel la conduite de dérivation comprend une vanne de dérivation (42) disposée de préférence dans ladite conduite de dérivation (41).

8. Dispositif de traitement des gaz d'échappement (100) selon l'une quelconque des revendications précédentes, comprenant en outre
une vanne de sortie principale (23), de préférence disposée dans ou en aval du conduit (32), en particulier accessible depuis l'extérieur du collecteur d'échappement (10),
et/ou
au moins une vanne d'entrée principale (34) disposée entre le collecteur d'échappement (10) et le pot catalytique (20), en particulier dans ledit au moins un orifice (31) prévu dans la cloison (30) entre le collecteur d'échappement (10) et le pot catalytique (20).

9. Dispositif de traitement des gaz d'échappement (100) selon l'une quelconque des revendications précédentes, comprenant au moins un second catalyseur, en particulier au moins un catalyseur de glissement de carburant (110), connecté à ladite au moins une interface (50).

10. Dispositif de traitement des gaz d'échappement (100) selon la revendication 9, dans lequel le second catalyseur (110) est disposé
• à une extrémité latérale (L) du pot catalytique (20) et/ou en contact thermique avec le celui-ci, et/ou
• sur le collecteur d'échappement (10) et/ou en contact thermique avec celui-ci, et en particulier dans lequel le second catalyseur (110) est intégré sur ou dans le collecteur d'échappement (10).

11. Dispositif de traitement des gaz d'échappement (100) selon la revendication 9 ou 10, dans lequel le second catalyseur (110) est monté sur un châssis (60) fixé au collecteur d'échappement (10) et/ou au pot catalytique (20).

12. Dispositif de traitement des gaz d'échappement (100) selon l'une quelconque des revendications 9 à 11, comprenant au moins deux seconds catalyseurs (110) connectés à ladite au moins une interface (50).

13. Moteur à combustion interne (1), en particulier un moteur à combustion à double carburant, de préférence un moteur à combustion alimenté à l'ammoniac, comprenant au moins un cylindre (2) et au moins un dispositif de traitement des gaz d'échappement (100) selon au moins l'une des revendications précédentes,
et en particulier dans lequel le moteur à combustion interne (1) comprend un dispositif de traitement des gaz d'échappement (100) pour l'ensemble des cylindres du moteur à combustion interne (1) ou dans lequel le moteur à combustion interne (1) comprend un dispositif de traitement des gaz d'échappement (100) pour jusqu'à sept cylindres (2) du moteur à combustion interne (1) chacun, en particulier pour jusqu'à six cylindres (2) du moteur à combustion interne (1) chacun, en particulier pour jusqu'à quatre cylindres (2) du moteur à combustion interne (1) chacun.

14. Moteur à combustion interne selon la revendication 13, comprenant un turbocompresseur (3), qui peut être mis en communication fluidique ou qui est en communication fluidique avec la sortie (40) du dispositif de traitement des gaz d'échappement (100).

15. Moteur à combustion interne selon la revendication 13 ou 14, comprenant une unité de commande (70) adaptée pour commuter un mode de fonctionnement entre
un premier mode de fonctionnement, dans lequel la vanne de dérivation (42) est ouverte et une vanne d'entrée principale (34), disposée de préférence dans ledit au moins un orifice (31), et une vanne de sortie principale (23), disposée de préférence dans ou en aval du conduit (32), sont fermées, et dans lequel de préférence la vanne de sortie d'interface (52), disposée de préférence dans la sortie d'interface (51), et la vanne d'entrée d'interface (54), disposée de préférence dans l'entrée d'interface (52), sont fermées, un deuxième mode de fonctionnement, dans lequel la vanne de dérivation (42) est fermée et la vanne d'entrée principale (34), disposée de préférence agencée dans ledit au moins un orifice (31), ainsi que la vanne de sortie principale (23), disposée de préférence dans ou en aval du conduit (32), sont ouvertes, et la vanne de sortie d'interface (52), disposée de préférence dans la sortie d'interface (51), est fermée, et de préférence la vanne d'entrée d'interface (54), disposée de préférence dans l'entrée d'interface (52), est fermée, et
un troisième mode de fonctionnement, dans lequel la vanne de dérivation (42) est fermée et la vanne d'entrée principale (34), disposée de préférence dans ledit au moins un orifice (31), est ouverte tandis que la vanne de sortie principale (23), disposée de préférence dans ou en aval du conduit (32), est fermée, et dans lequel la vanne de sortie d'interface (52), disposée de préférence dans la sortie d'interface (51), et la vanne d'entrée d'interface (54), disposée de préférence dans l'entrée d'interface (52), sont ouvertes.

16. Kit de rétrofit comprenant un dispositif de traitement des gaz d'échappement (100) selon l'une des revendications 1 à 12, comprenant au moins un second catalyseur (110) pouvant être connecté à l'interface (50), et en particulier dans lequel ledit au moins un second catalyseur (110) comprend une première tuyauterie qui raccordable à une sortie d'interface (51) et une seconde tuyauterie raccordable à une entrée d'interface (52), et en particulier dans lequel ledit second catalyseur est un catalyseur de glissement de carburant.

17. Procédé de fonctionnement d'un moteur à combustion interne selon la revendication 15,
dans lequel, pour un premier mode de fonctionnement, la vanne d'entrée principale (34), disposée de préférence dans l'au moins un orifice (31), et la vanne de sortie principale (23), disposée de préférence dans ou en aval du conduit (32), sont fermées, et la vanne de sortie d'interface (52), disposée de préférence dans la sortie d'interface (51), et la vanne d'entrée d'interface (54), disposée de préférence dans l'entrée d'interface (52), sont fermées, et la vanne de dérivation (42) est ouverte,
dans lequel pour un deuxième mode de fonctionnement, la vanne d'entrée principale (34), disposée de préférence dans l'au moins un orifice (31), et la vanne de sortie principale (23), disposée de préférence dans ou en aval du conduit (32), sont ouvertes, et la vanne de sortie d'interface (52), disposée de préférence dans la sortie d'interface (51), et la vanne d'entrée d'interface (54), disposée de préférence dans l'entrée d'interface (52), sont fermées, et la vanne de dérivation (42) est fermée,
dans lequel pour un troisième mode de fonctionnement, la vanne d'entrée principale (34), disposée de préférence dans l'au moins un orifice (31), est ouverte et la vanne de sortie principale (23), disposée de préférence dans ou en aval du conduit (32), est fermée, et la vanne de sortie d'interface (52), disposée de préférence dans la sortie d'interface (51), et la vanne d'entrée d'interface (54), disposée de préférence dans l'entrée d'interface (52), sont ouvertes, et la vanne de dérivation (42) est fermée.
